(19) Europäisches Patentamt
European Patent Office
Office européen des brevets

(11) EP 0 673 737 B1

(12) EUROPEAN PATENT SPECIFICATION

(45) Date of publication and mention of the grant of the patent:
**08.12.1999 Bulletin 1999/49**

(51) Int. Cl.[6]: **B29C 33/68**, B29C 33/64, B29C 35/10, B32B 27/10, B32B 27/16

(21) Application number: **95301974.2**

(22) Date of filing: **24.03.1995**

(54) **Preparing release sheets**

Verfahren zur Herstellung von Trennfolien

Procédé pour la fabrication de feuilles de décollage

(84) Designated Contracting States:
**DE FR GB**

(30) Priority: **25.03.1994 JP 7981894**

(43) Date of publication of application:
**27.09.1995 Bulletin 1995/39**

(73) Proprietor:
**SHIN-ETSU CHEMICAL CO., LTD.**
**Chiyoda-ku Tokyo (JP)**

(72) Inventors:
- **Irifune, Shinji,**
  **c/o Silicone Elec. Materials Lab.**
  **Matsuida-machi, Usui-gun, Gunma-ken (JP)**
- **Ohba, Toshio,**
  **c/o Silicone Elec. Materials Lab.**
  **Matsuida-machi, Usui-gun, Gunma-ken (JP)**

(74) Representative:
**Stoner, Gerard Patrick et al**
**MEWBURN ELLIS**
**York House**
**23 Kingsway**
**London WC2B 6HP (GB)**

(56) References cited:

**EP-A- 0 081 444** | **EP-A- 0 412 430**
**WO-A-88/07931** | **DE-A- 3 834 007**

- **DATABASE WPI Section Ch, Week 9429, Derwent Publications Ltd., London, GB; Class AGC, AN 94-238229 C29! & JP-A-6 171 026 (MITSUBISHI PAPER MILLS) 21 June 1994**
- **PATENT ABSTRACTS OF JAPAN vol. 17, no. 678 (C-1141) 13 December 1993 & JP-A-05 222 699 (HONSHU PAPER CO. LTD.) 31 August 1993**
- **PATENT ABSTRACTS OF JAPAN vol. 16, no. 520 (P-1444) 26 October 1992 & JP-A-04 192 112 (VICTOR CO. OF JAPAN LTD.) 10 July 1992**
- **DATABASE WPI Section Ch, Week 8923, Derwent Publications Ltd., London, GB; Class AGC, AN 89-169317 C23! & JP-A-1 110 461 (SEKISUI CHEM. IND. K.K.) 27 April 1989**

EP 0 673 737 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

This invention relates to a method for preparing a release sheet for lamination onto an adhesive, comprising the steps of applying an electron-curable silicone composition to a surface of a support sheet to form a coating and curing the coating with electron radiation.

Prior Art

A variety of electron radiation-curable silicone compositions have been proposed. Most are based on silicone resins having a radical reactive functional group in a siloxane backbone. In these electron radiation-curable silicone compositions, radicals generated by electron beam irradiation trigger a reaction whereby curing proceeds. This type of curing through radical reaction is completed within a very short time, promising high productivity.

Electron radiation-curable silicone compositions are used for surface treating various base materials. They are particularly useful as agents for treating the back side of pressure-sensitive adhesive tape and agents for coating release sheets overlying adhesive labels, because cured coatings based on silicone have the ability of readily releasing tacky materials.

On the other hand, thermosetting silicone compositions are currently most widely used as agents for treating release sheets. The thermosetting silicone compositions, however, have the problem that since reaction has not completely terminated even after thermosetting, it is necessary to stabilize the physical properties or release properties of a cured coating by aging release sheets are as cured under certain conditions to promote stabilization of the coating.

In contrast, it is believed that the use of electron radiation-curable silicone compositions eliminates a need for aging of release sheets because reaction completes briefly as mentioned above. WO-A-88/07931 describes this for a coating composition consisting partly of radiation-curable silicone. However, we found that when release sheets coated with an electron radiation-curable silicone composition are coated with an adhesive both immediately after curing and after long term aging, the long aged sheets do in fact require a lower force to strip than the as-cured sheets. Therefore, in order to produce release sheets of stable quality, an electron radiation-curable silicone composition still requires aging, rendering the manufacturing process cumbersome.

DE-A-3834007 (which forms the basis for the two-part form of claim 1) describes forming easy-release silicone coatings on paper or textile sheets. The viscosity-enhanced silicone base is applied and cured using electron beam radiation, with a heat treatment either during or after the radiation treatment e.g. at from 150°C to 250°C for from 1 to 30 minutes. The heat treatment is stated to improve adhesion to the substrate and to eliminate low-molecular residues.

EP-A-81444 describes UV-curability of silicone coating compositions containing ordinary organopolysiloxanes (i.e. without special active groups) together with aminopolyalkoxysilane. An oxygen containing atmosphere is required during the UV-curing; relative humidity from 5% to 95% and preferably 20 to 80% is also recommended for the curing stage.

The general aim herein is to provide new and useful techniques for making release materials, and in particular to provide a method for preparing a release sheet which gives easy release and whose release properties are stabilised shortly after electron radiation curing, in a commercially advantageous manner.

This is achieved according to the invention by the method as defined in claim 1.

Particular embodiments of the invention are the subject of the dependant claims.

Making efforts to reduce the aging time and to stabilize release properties of release surfaces coated with an electron radiation - curable silicone composition, we have found that by applying an electron radiation-curable silicone composition to a surface of a support to form a coating, curing the coating with electron radiation, and substantially immediately thereafter humidifying the cured coating, a release surface of quality which is lightly releasable, has release properties stabilized shortly after curing, and maintains stable release properties without long term aging can be produced in a simple manner.

Without necessarily being bound by theory, we believe that the reason why release surfaces coated with an electron radiation-curable silicone composition change their release properties with the lapse of time is that since radicals generated by electron beam irradiation survive relatively stably at room temperature, some kind of interaction occurs between the radicals and an adhesive. As a result, double release processes are involved. If a coating of an electron radiation-curable silicone composition is humidified after curing but before superposition to any adhesive, the number of radicals is reduced so that release properties are stabilized shortly after curing.

According to the present invention as stated in claim 1, a release sheet is prepared by applying an electron radiation-curable silicone composition to a support sheet surface to form a coating, curing the coating with electron radiation, and humidifying the cured coating, optionally with heating, for lamination to an adhesive.

FURTHER EXPLANATIONS; PREFERRED AND OPTIONAL FEATURES

According to our present proposals as release sheet is prepared by coating a support sheet with an electron radiation-curable silicone composition, curing the coating with electron beams, and humidifying the cured coating prior to lamination to an adhesive agent.

The electron radiation-curable silicone composition used herein contains a silicone as a main component. Various silicones are useful as long as they are curable with electron beams. Preferred are those silicones having two or more radical reactive groups in a molecule such as acryl, methacryl, mercapto, styryl, vinyl and alkenyl groups. These silicones may be used alone or in admixture of two or more in the composition. Also useful are mixtures of silicones having different degrees of polymerization, mixtures of silicones having different contents of functional group, and mixtures of silicones having different functional groups.

If desired, the electron radiation-curable silicone composition may further contain additives including agents for controlling curing inhibition by oxygen such as diethylamine ethanol and piperidine, reaction diluents, organic solvents, leveling agents, fillers, antistatic agents, defoaming agents, and organopolysiloxanes free of a radical reactive group. These additives may be added in conventional amounts.

The supports which can be used in the release sheet include plastic films and sheets of polyester, polypropylene, polyethylene, polyvinyl chloride, polytetrafluoroethylene, and polyimide; paper supports such as glassine paper, kraft paper, and clay coated paper; and laminated papers such as polyethylene laminated wood-free paper and polyethylene laminated kraft paper. They may be conventional.

The electron radiation-curable silicone composition may be applied to the support by well-known techniques, for example, roll coating, gravure coating, wire doctor coating, air knife coating, and dipping. The composition is preferably coated onto the support at a coverage of 0.01 to 20 g/m$^2$. With a coverage of less than 0.01 g/m$^2$, the support may be unevenly coated with the composition, leading to release force variations. With a coverage of more than 20 g/m$^2$, less electron beam would be transmitted by such a thick coating, resulting in short curing.

The coating of the silicone composition is then exposed to an electron beam for curing. To this end, electron beam irradiating devices based on the curtain, scanning and double scanning systems may be used. Desirably, electron beams are driven at an accelerating voltage of about 100 to 1,000 kV, especially about 150 to 300 kV and irradiated in a dose of about 0.5 to 10 Mrad. With an accelerating voltage of less than 100 kV, energy transmission would be short whereas an accelerating voltage of more than 1,000 kV is uneconomical. Curing would be short with a dose of less than 0.5 Mrad whereas a dose of more than 10 Mrad can deteriorate the support. This may be conventional.

After the electron radiation-curable silicone composition is applied to the support and cured with electron beams, the cured coating is humidified to stabilise the coating.

Preferably the coating cured with electron beams is heated at a temperature of about 50 to 100°C, especially 70 to 100°C for about 30 to 600 seconds, especially about 60 to 300 seconds. Temperatures below 50°C may be too low to achieve the intended effect. Temperatures above 100°C may deteriorate the support if it is made of less heat resistant materials such as plastic film. Heating may be effected in various ways. For example, the support with a cured silicone coating in a roll or sheet form is kept in a container held at a temperature in the above-defined range. Alternatively, a heating furnace is provided on the same line as the electron irradiating device. The coated support is passed through the heating furnace where it is heated to a temperature in the above-defined range. The latter embodiment achieves in-line processing.

For the humidifying preferred humidifying conditions include a humidity of about 75 to 95%, especially about 75 to 85% and a time of about 30 to 600 seconds, especially about 60 to 300 seconds. A humidity of less than 75% may be too low to achieve the intended effects whereas a humidity of more than 95% may cause the support to curl to an unacceptable extent if it is paper. Humidifying may be effected in various ways. For example, the support with a cured silicone coating in a roll or sheet form is kept in or passed through a constant temperature container held at a humidity in the above-mentioned range. Alternatively, a steam treating device is provided e.g. on the same line as the electron irradiating device. The coated support is passed through the steam treating device where it is humidified. The latter embodiment achieves in-line processing.

The coating cured with electron beams may be heated and humidified, either concurrently or successively.

In our work we have thus prepared release sheets which are lightly releasable, whose release properties are stabilized shortly after curing, and which exhibit a stable release force without long term aging, produced in a simple, commercially advantageous manner.

EXAMPLE

Examples of the present invention are given below by way of illustration and not by way of limitation.

Examples & Comparative Examples

The electron radiation-curable silicone composition used consisted of 60 parts by weight of $M_3D^A_{18}D_{180}T$ and 40 parts by weight of $M_3D^A_5D_{92}T$ wherein M, $D^A$, D and T are defined below.

M=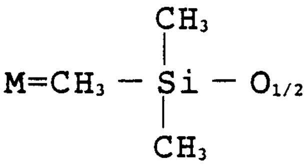

$D^A$=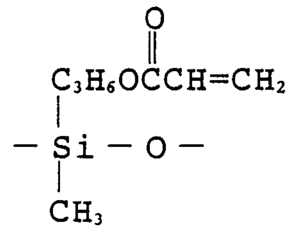

D=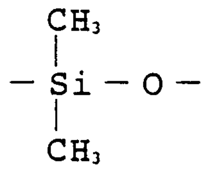

$T=CH_3SiO_{3/2}$

The composition was applied to one surface of polyethylene laminated paper to a coverage of 1.0 g/m$^2$. By operating an electron beam irradiating device model C-150 manufactured by ESI Company at an accelerating voltage of 165 kV, the coating was irradiated for curing with electron beams in a dose of 3 Mrad. The cured coating was treated under the conditions shown in Table 1. A release force was measured by the following test both immediately after curing and after storage.

Release force measurement

An acrylic pressure-sensitive adhesive SK-801B (manufactured by Soken Chemical K.K.) was applied to the surface of the cured coating and heat treated at 100 °C for 3 minutes. A polyester film of 38 µm thick was superposed on the adhesive coated surface. The sample was cut into strips of 5 cm wide. Using a tensile tester, the overlying film was peeled from the sample strip at an angle of 180° and a peeling rate of 0.3 m/min. A force (g/5 cm) required to peel the film was measured.

The results are shown in Table 1.

Table 1

| Treating conditions | | Release force (g/5 cm) | | |
|---|---|---|---|---|
| | | As -cured | After treatment | After 3 days |
| Comparative Example 1 | heating 70°C, 300 sec. | 230 | 130 | 110 |
| Example 2 | humidity, RH 85%, 300 sec. | 230 | 110 | 100 |
| Example 3 | heating/ humidity 70°C, RH 85%, 300 sec. | 230 | 95 | 90 |
| Comparative Example 2 | aging room temperature, 1 day | 230 | 170 | 140 |

As is evident from Table 1, by using the present teachings a release sheet which is lightly releasable and whose release force is stabilized shortly after curing can be prepared in a simple manner.

Although some preferred embodiments have been described, many modifications and variations may be made thereto in the light of the above teachings. It is therefore to be understood that within the scope of the appended claims, the invention may be practiced otherwise than as specifically described.

## Claims

1. A method for preparing a release sheet for lamination onto an adhesive, comprising the steps of

   applying an electron radiation-curable silicone composition to a surface of a support sheet to form a coating, and
   curing the coating with electron radiation,
   characterised in that the cured coating is then subjected to a humidifying treatment under conditions of 75% to 95% relative humidity to stabilise the release properties of the coating.

2. A method according to claim 1 in which the cured coating is subjected to a heat treatment at temperature in the range 50 to 100°C.

3. A method according to claim 2 in which the heat treatment is carried out for from 30 to 600 seconds.

4. A method according to any one of the preceding claims in which the humidifying treatment is carried out for from 30 to 600 seconds.

5. A method according to claim 2 or any claim dependent thereon in which the humidifying and heat treatments are concurrent.

6. A method according to any one of the preceding claims in which the support sheet is plastic film, paper or laminated paper.

## Patentansprüche

1. Verfahren zur Herstellung einer Abziehfolie zum Auflaminieren auf einen Kleber, umfassend die Schritte des Aufbringens einer elektronenstrahlhärtbaren Silikonzusammensetzung auf eine Oberfläche einer Trägerfolie, um eine Beschichtung auszubilden, und des Härtens der Beschichtung mittels Elektronenstrahl,
   dadurch gekennzeichnet, daß die gehärtete Beschichtung dann einer Befeuchtungsbehandlung unter Bedingungen von 75 bis 95 % relativer Luftfeuchtigkeit unterzogen wird, um die Ablöseeigenschaften der Beschichtung zu stabilisieren.

2. Verfahren nach Anspruch 1, bei dem die gehärtete Beschichtung einer Wärmebehandlung bei einer Temperatur im Bereich von 50 bis 100 °C unterzogen wird.

3. Verfahren nach Anspruch 2, bei dem die Wärmebehandlung 30 bis 600 s lang durchgeführt wird.

4. Verfahren nach einem der vorangegangenen Ansprüche, bei dem die Befeuchtungsbehandlung 30 bis 600 s lang durchgeführt wird.

5. Verfahren nach Anspruch 2 oder einem der davon abhängigen Ansprüche, bei dem die Befeuchtungs- und die Wärmebehandlung gleichzeitig erfolgen.

6. Verfahren nach einem der vorangegangenen Ansprüche, bei dem die Trägerfolie Kunststoffilm, Papier oder laminiertes Papier ist.

## Revendications

1. Méthode pour la préparation d'une feuille de décollage pour stratification sur un adhésif, comprenant les étapes de :

   appliquer une composition de silicone durcissable par un rayonnement d'électrons sur une surface d'une feuille de support pour former un revêtement, et
   durcir le revêtement par le rayonnement d'électrons,
   caractérisée en ce que le revêtement durci est alors soumis à un traitement d'humidification dans des conditions de 75% à 95% d'humidité relative pour stabiliser les propriétés de décollage du revêtement.

2. Méthode selon la revendication 1 dans laquelle le revêtement durci est soumis à un traitement thermique à une température dans la gamme de 50 à 100°C.

3. Méthode selon la revendication 2 dans laquelle le traitement thermique est effectué pendant 30 à 600 secondes.

4. Méthode selon l'une quelconque des revendications précédentes dans laquelle le traitement d'humidification est effectué pendant 30 à 600 secondes.

5. Méthode selon la revendication 2 ou toute revendication qui en est dépendante dans laquelle les traitements d'humidification et thermique sont concurrents.

6. Méthode selon l'une quelconque des revendications précédentes, dans laquelle la feuille de support est un film plastique, du papier ou du papier stratifié.